Europäisches Patentamt

European Patent Office

Office européen des brevets

(19)

(11) Numéro de publication: **0 170 553 B1**

(12) **FASCICULE DE BREVET EUROPEEN**

(45) Date de publication du fascicule du brevet: **07.11.90**

(51) Int. Cl.⁵: **B 23 B 5/16**

(21) Numéro de dépôt: **85401222.6**

(22) Date de dépôt: **19.06.85**

(54) **Procédé et dispositif d'usinage d'épaulements de joints pour tubes.**

(30) Priorité: **19.06.84 FR 8409566**

(43) Date de publication de la demande:
**05.02.86 Bulletin 86/06**

(45) Mention de la délivrance du brevet:
**07.11.90 Bulletin 90/45**

(84) Etats contractants désignés:
**AT BE DE FR GB IT NL SE**

(56) Documents cités:
**US-A-2 094 491**
**US-A-2 211 183**
**US-A-3 124 024**
**US-A-3 181 398**
**US-A-3 717 055**
**US-A-3 994 516**

(73) Titulaire: **VALLOUREC Société Anonyme dite.**
**7, place du Chancelier Adenauer**
**F-75116 Paris (FR)**

(72) Inventeur: **Plaquin, Bernard**
**15, Rond Point des Acacias**
**F-59620 Aulnoye (FR)**
Inventeur: **Fradin, Louis**
**Allée des Grands Chênes**
**F-59620 Aulnoye (FR)**

(74) Mandataire: **Nony, Michel et al**
**Cabinet Nony 29, rue Cambacérès**
**F-75008 Paris (FR)**

Courier Press, Leamington Spa, England.

**Description**

La présente invention est relative à un nouveau procédé pour réaliser l'usinage des éléments d'un joint pour tubes d'acier, notamment destinés à l'industrie du pétrole, qui comporte au moins un filetage, une surface tronconique et au moins une butée de limitation de vissage ainsi qu'à un dispositif pour la mise en oeuvre de ce procédé.

On utilise couramment dans l'industrie pétrolière des joints pour tubes d'acier dans lesquels les éléments de tubes sont assemblés à l'aide de filetages tronconiques mâles et femelles, et dans lesquels il existe au moins un couple de butées qui coopèrent sur l'élément mâle et sur l'élément femelle pour assurer la limitation du vissage.

C'est ainsi que l'on connaît des joints des lesquels on réunit des tubes par des filetages tronconiques et dans lesquels l'extrémité de l'élément mâle vient buter contre un épaulement situé à l'intérieur de l'élément femelle.

Il existe également des joints de ce type dans lesquels il existe aussi un épaulement de limitation de vissage sur l'élément mâle, épaulement contre lequel l'extrémité de l'élément femelle vient prendre appui lors du vissage.

Avec les procédés de fabrication actuellement connus, les tolérances d'usinage sont telles qu'il est difficile de positionner de manière précise, d'une part les butées de limitation de vissage par rapport aux filetages tronconiques, et d'autre part les butées entre elles.

Cela se traduit dans la pratique par le fait que dans un même lot d'éléments de joints réputés identiques, certains couples d'éléments mâle et femelle donnent lieu à un frettage important au niveau des filetages, alors que d'autres couples d'éléments ne donnent lieu qu'à un frettage relativement faible.

Il en résulte des difficultés importantes pour déterminer la zone de couple de serrage optimum du joint, qui permet d'une part d'obtenir une bonne étanchéité du joint et d'autre part d'éviter la détérioration des surfaces de butées.

Il est encore plus difficile d'obtenir des tolérances d'usinage suffisamment faibles dans le cas de joints comportant plusieurs couples de butées de limitation de vissage pour que chacun des couples de butées prenne la part qui lui revient dans le couple de serrage final du joint. Dans la pratique il a été jusqu'alors pratiquement nécessaire de renoncer à utiliser simultanément plusieurs couples de butées de limitation de vissage, en se contentant généralement d'avoir un couple de butées de limitation de vissage principales, l'autre couple de butées, si il existe, ne servant accessoirement à titre de sécurité dans le cas où un vissage excessif serait appliqué au joint, cette sécurité étant d'ailleurs imparfaite et ne permettant pas d'éviter à coup sûr des déformations plastiques sur le premier couple de butées.

Le procédé selon l'invention assure un positionnement précis des butées de limitation de vissage, d'une part par rapport au filetage tronconique, et d'autre part entre les butées de limitation de vissage qui peuvent exister sur un même joint.

La présente invention a pour objet un procédé pour usiner un élément de joint pour tube d'acier destiné en particulier à l'industrie du pétrole, tel que défini dans la revendication 1.

On voit que, grâce à ce procédé, on arrête l'usinage final de la ou des butées, (c'est-à-dire on détermine la position de la ou des butées) à un endroit bien déterminé par rapport au filetage, ce qui permet d'assurer, pour une mise en contact des butées lors du vissage du joint un frettage sensiblement constant de l'élément mâle et de l'élément femelle au niveau des filetages.

On remarque également que dans le cas où il existe plusieurs butées de limitation de vissage sur un même élément, ces butées sont à des distances prédéterminées constantes du fait qu'elles sont usinées simultanément à l'aide d'outils fixés sur une même broche porte-outils.

Il est connu d'après le brevet US—A—2 211 183 de procéder à un réusinage des butées de limitation de vissage de tels joints, mais ce réusinage ne permet par de réaliser les butées de limitation de vissage dans une position précise par rapport aux filetages ou aux surfaces tronconiques d'étanchéité.

Il en est de même du dispositif décrit dans le brevet US—A—3 717 055.

La présente invention a également pour objet un dispositif pour mettre en oeuvre le procédé ci-dessus, de dispositif étant défini dans la revendication 8.

L'invention peut s'appliquer à l'usinage de joints dans les éléments desquels les filetages et la ou les butées sont réalisés dans l'épaisseur des tubes après refoulement et forgeage éventuels de l'extrémité de ces derniers.

L'invention peut s'appliquer également à des joints composites dans lesquels les butées peuvent être réalisées par des éléments rapportés tels que des manchons vissés et/ou collés.

Dans un mode de mise en oeuvre préféré de l'invention la surface tronconique usinée au préalable sur l'élément de joint est constituée par les sommets des filets constituant le filetage conique de l'élément, ou par les sommets de certains filets (notamment d'extrémité) qui définissent une surface conique sur un filetage qui est cylindrique dans son ensemble.

De cette manière l'on peut obtenir un positionnement précis des butées de limitation de vissage par rapport aux filetages.

Dans une variante de l'invention on peut utiliser une bague conique qui au lieu de s'appliquer contre le filetage s'applique contre une surface d'étanchéité conique qui a été préalablement usinée de manière définitive sur l'élément de joint considéré.

On obtient ainsi un positionnement rigoureux des butées par rapport aux surfaces d'étanchéité coniques.

Cette variante peut être notamment utilisée dans le cas de filetages cylindriques et en particulier dans le cas de filetages cylindriques étagés qui sont séparés par des surfaces d'étanchéité coniques.

Dans le but de mieux faire comprendre l'invention on va en décrire maintenant à titre d'illustration et sans aucun caractère limitatif plusieurs modes de réalisation donnés à titre d'exemple qui ont été représentés sur le dessin annexé.

Sur ce dessin:

—la figure 1 est une vue en demi-coupe schématique d'un dispositif conforme à l'invention effectuant l'usinage d'un élément de joint mâle comportant une seule butée à son extrémité,

—la figure 2 est une vue en demi-coupe schématique d'un dispositif conforme à l'invention effectuant l'usinage simultané de deux butées sur un élément femelle comportant un filetage conique interne.

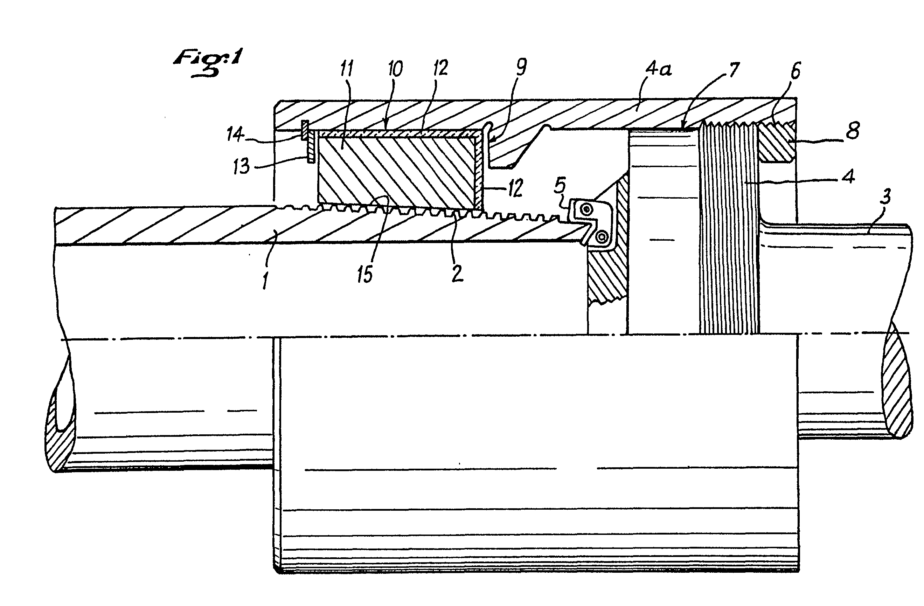

On voit en demi-coupe sur la figure 1 l'extrémité de l'élément mâle 1 sur lequel on a déjà usiné de manière définitive le filetage conique externe 2.

La broche porte-outils 3 comporte un plateau 4 sur lequel est fixé un outil 5 dont la forme correspond à celle que l'on veut donner à l'extrémité de l'élément mâle 1 qui doit être usinée définitivement après un pré-usinage réalisé un préalable.

Un manchon cylindrique 4a est fixé dans une position prédéterminée sur le plateau 4 du mandrin porte-outils. Cette fixation est réalisée par vissage dans les filetages 6, tandis qu'une partie du plateau 4 s'emmanche dans un alésage cylindrique 7 du manchon 4a.

Une bague de blocage 8 formant butée se visse dans le filetage 6 du manchon 4a de manière à pouvoir immobiliser dans une position réglable et prédéterminée le manchon 4a par rapport au plateau 4.

La manchon 4a comporte une butée interne 9 servant, comme cela sera indiqué ci-après, à la limitation de l'avance de l'outil 5 lors de l'usinage.

Le manchon 4a comporte également, en avant de la butée 9, un alésage cylindrique 10, à l'intérieur duquel une bague 11 munie sur son pourtour et sur sa face arrière d'un revêtement anti-friction 12, peut pivoter autour de son axe et se déplacer axialement. Une butée 13 maintenue par un clip 14 empêche la bague 11 de se dégager du manchon 4a.

Grâce à la bague de blocage 8 on fixe le manchon 4a, par rapport au plateau 4, dans une position telle que lorsque la bague 11 vient prendre appui contre la butée de limitation d'avance 9 du manchon 4a, l'extrémité de l'élément de tube 1 se trouve usinée de manière définitive dans la position que l'on souhaite lui donner par rapport au filetage 2.

La surface interne 15 de la bague 11 a une forme tronconique dont la conicité est égale à celle du filetage 2 de telle sorte que, lors de l'usinage, la surface tronconique 15 vient prendre appui sur le sommet des filets du filetage 2.

Conformément à l'invention, il est avantageux qu'un moyen élastique (non représenté) repousse constamment la bague 11 dans une direction opposée à l'outil 5.

Dans une variante, la surface tronconique 15 de la bague 11 pourrait prendre appui sur la partie tronconique des sommets des filets du filetage 2 qui seraient situés au voisinage de l'extrémité du tube 1, le filetage 2 étant alors cylindrique mais avec des sommets de filet tronqués à l'extrémité du filetage.

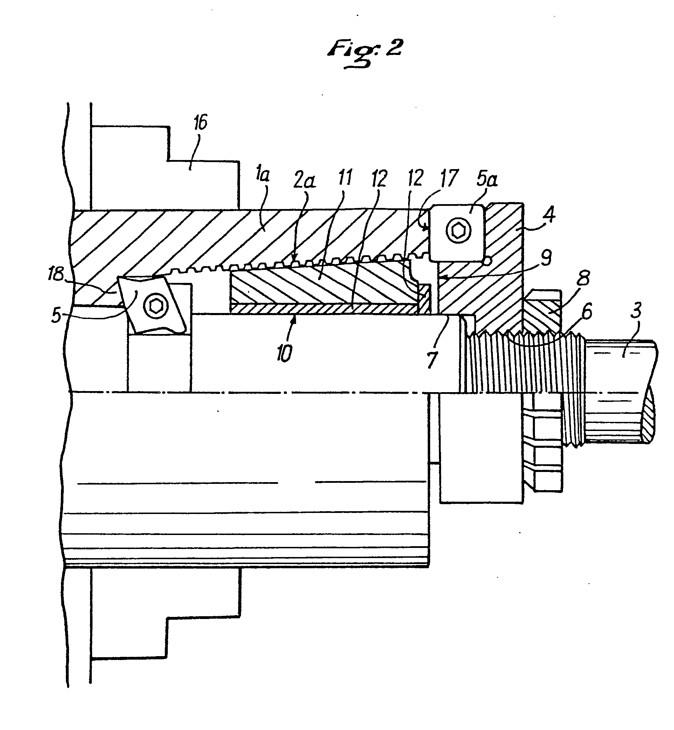

On a schématiquement représenté en demi-coupe sur la figure 2 un autre dispositif conforme à l'invention permettant de réaliser l'usinage final des surfaces des butées 17 et 18 qui se trouvent sur un élément femelle 1a muni d'un filetage tronconique interne 2a.

L'élément femelle 1a est maintenu par des mors tournants 16 dans l'axe de la broche porte-outils 3 qui est munie d'une partie cylindrique 10 sur laquelle coulisse une bague 11 munie de revêtements anti-friction 12 et dont la surface externe a une forme tronconique dont la conicité est égale à celle du filetage 2a de l'élément femelle.

Un plateau 4 qui porte un outil 5a est monté sur la broche porte-outils 3 par une portée cylindrique 7 et par un filetage 6, tandis qu'un contre-écrou 8 assure le blocage du plateau 4 dans une position qui correspond à la distance que l'on désire obtenir entre les surfaces des butées 17 et 18 de l'élément femelle qui sont usinées définitivement par les outil 5 et 5a..

Comme dans le cas précédent représenté sur la figure 1, la bague coulissante 11 est de préférence repoussée en direction de l'outil 5 par un organe élastique non représenté.

Dès que la broche porte-outils se déplace en direction des portées de limitation de vissage à usiner, la surface externe conique de la bague 11 vient prendre appui contre les sommets de filets du filetage 2a dont l'usinage a été terminé.

Les outils 5 et 5a se déplacent alors vers la gauche en usinant les butées 17 et 18 ainsi qu'éventuellement pour l'outil 5 les surfaces d'étanchéité qui sont au voisinage de la butée 18. Il s'agit là bien entendu de l'usinage définitif, le pré-usinage ayant été fait au préalable.

Tandis que la bague 11 tourne par rapport à la broche porte-outils 3 qui est déplacée vers la gauche en assurant l'usinage définitif des butées 17 et 18 comme il vient d'être expliqué, l'usinage s'arrête automatiquement dans la position voulue lorsque la butée 9 du plateau 4 vient prendre appui contre la face correspondante de bague 11.

Dans les modes de réalisation décrits, la limitation du mouvement de l'avance d'usinage des butées est assurée par le contact physique de la bague 11 sur la butée 9 solidaire de la broche porte-outils.

Il est clair cependant que cette limitation peut être obtenue par n'importe quel autre moyen approprié. Ainsi, par exemple, on peut prévoir une butée mécanique positionnée au départ par un ressort qui se comprime pendant l'usinage, une butée à roulement à billes, aiguilles ou rouleaux étant interposée entre la butée mécanique et la bague. Une butée à contact électrique, réglable, est avantageusement prévue et réglée de manière à anticiper de quelques centièmes de millimètres la butée mécanique. Le contact électrique obtenu peut être utilisé pour arrêter l'avance de l'ensemble du dispositif sans interrompre la rotation de l'élément de joint en cours d'usinage.

On voit que, grâce à l'invention, il est possible, par des moyens simples de réaliser l'usinage de butées de limitation de vissage qui sont positionnées de manière précise, tant par rapport au filetage de l'élément de joint qu'entre elles.

On peut ainsi grâce à l'invention réaliser des joints dont les tolérances de fabrication sont beaucoup plus restreintes, ce qui permet de déterminer plus facilement la zone de couple optimum de vissage et de donner à cette zone une étendue nettement plus grande ce qui facilite largement le serrage des joints sur chantier.

Enfin, il est clair que les mouvements de la broche porte-outils, de la bague tronconique et de l'élément tubulaire sont des mouvements relatifs et que les pièces en mouvement et les pièces fixes peuvent être inversées.

**Revendications**

1. Procédé pour usiner les butées de limitation de vissage d'un joint pour tube ayant des éléments coniques correspondants mâle et femelle, comprenant:
—usiner une surface tronconique (2, 2a) sur un desdits éléments mâle (1) ou femelle (1a) jusqu'à sa configuration finale,
—préusiner une butée de limitation de vissage (17, 18) sur ledit élément;
—engager une bague (11) sur ladite surface tronconique (2, 2a), ladite bague ayant une surface tronconique complémentaire à la surface tronconique dudit élément,
—positionner une broche (3) supportant un outil (5, 5a) pour usiner ladite butée de limitation de vissage (17, 18) coaxialement avec ladite bague, ladite bague étant libre de se déplacer en rotation et axialement par rapport à ladite broche;
—communiquer à ladite broche (3) une rotation et un déplacement axial pour réaliser l'usinage final de butée de limitation de vissage (17, 18) dudit élément et,
—interrompre ledit usinage final de la butée à une position prédéterminée lorsque la face (12) de ladite bague (11) prend appui sur une butée (9) solidaire de ladite broche,
—réaliser de la même manière la butée de limitation de vissage de l'autre élément,
—les positions de chacune des butées (9) réalisées sur les broches étant telles que lors du vissage des deux éléments (1, 2) du joint les butées de limitation de vissage (17, 18) viennent en contact au moment ou le frettage désiré pour les filetages coniques et/ou les surfaces coniques d'étanchéité est atteint.

2. Procédé selon la revendication 1, caractérisé par le fait que ladite surface tronconique (2, 2a) est constitué par les sommets des filets d'un filetage conique.

3. Procédé selon la revendication 1, caractérisé par le fait que ladite surface tronconique (2, 2a) est constituée par les sommets des filets d'un filetage cylindrique tronqués de manière conique.

4. Procédé selon la revendication 1, caractérisé par le fait que ladite surface tronconique (2, 2a) est constituée par une surface d'étanchéité tronconique.

5. Procédé selon la revendication 4, caractérisé par le fait que la surface d'étanchéité tronconique est adjacente à une extrémité d'un filetage cylindrique.

6. Procédé selon la revendication 4, caractérisé par le fait que la surface d'étanchéité tronconique est située entre deux sections de filetages cylindriques.

7. Procédé selon la revendication 1, caractérisé par le fait que ladite broche comprend un second outil (5a) pour usiner simultanément une deuxième butée de limitation de vissage.

8. Dispositif pour usiner les butées de limitation de vissage d'un joint tubulaire ayant des éléments tronconiques correspondants mâle et femelle (2, 2a), comprenant:
—un premier outillage comportant
. une bague (11) pour s'engager sur une surface tronconique de l'élément mâle;
. une broche (3) positionnée coaxialement avec ladite bague (11) de manière telle que ladite bague est libre de tourner et de se déplacer axialement par rapport à ladite broche;
. un outil (5) placé sur ladite broche pour usiner la butée de limitation de vissage sur l'élément mâle, et
. une butée d'arrêt (9) sur ladite broche pour s'appuyer contre ladite bague (11) lorsque la butée de limitation de vissage est usinée jusqu'à une position prédéterminée par rapport à ladite surface tronconique
—et un second outillage comportant
. une bague (11) pour s'engager sur une surface tronconique de l'élément femelle,
. une broche (3) positionnée coaxialement avec ladite bague (11) de manière telle que ladite bague est libre de tourner et de se déplacer axialement par rapport à ladite broche;
. un outil (5a) placé sur ladite broche pour usiner la butée de limitation de vissage sur l'élément femelle et
. une butée d'arrêt (9) solidaire de ladite broche pour s'appuyer contre ladite bague (11) lorsque la butée de limitation de vissage est usinée jusqu'à une position prédéterminée par rapport à ladite surface tronconique,
. les positions des butées d'arrêt (9) sur lesdites broches (3) étant déterminées par le frettage qui doit exister dans les filetages et/ou entre les surfaces coniques d'étanchéité après vissage du joint.

9. Dispositif selon la revendication 8, caractérisé par le fait que la bague (11) est repoussée par des moyens élastiques en direction du filetage de l'élément à usiner.

**Patentansprüche**

1. Verfahren zur Bearbeitung von Einschraubbegrenzungsanschlägen einer Rohrverbindung aus einander entsprechenden konischen Bolzen- und Mutterelement, dadurch gekennzeichnet,

daß in eines der Bolzen-(1) oder Mutterelemente (1a) eine konische Fläche bis zum Erreichen ihrer endgültigen Form eingearbeitet wird,

daß ein Einschraubbegrenzungsanschlag (17, 18) an diesem Element im Rahmen eines Vorbearbeitungsvorganges hergestellt wird,

daß ein Ring (11) auf die konische Fläche (2, 2a) aufgebracht wird, der eine konische Fläche aufweist, die komplementär zur konischen Fläche des Elementes ist,

daß eine Spindel (3) vorgesehen ist, die ein Werkzeug (5, 5a) trägt, um den Einschraubbegrenzungsanschlag (17, 18) koaxial zum Ring zu bearbeiten, wobei der Ring frei drehbar und axial in Bezug auf die Spindel verstellbar ist,

daß die Spindel (3) in Rotation versetzt und axial verstellt wird, um die Fertigbearbeitung des Einschraubbegrenzungsanschlages (17, 18) des Elementes durchzuführen,

daß die Fertigbearbeitung des Einschraubbegrenzungsanschlages in einer vorbestimmten Stellung unterbrochen wird, wenn die Vorderfläche (12) des Ringes (11) gegen einen Anschlag (9) zum Anliegen kommt, der mit der Spindel verbunden ist,

daß dann auf die gleiche Weise der Einschraubbegrenzungsanschlag des anderen Elementes bearbeitet wird, und daß die Positionen jedes der Anschläge (9) an der Spindel so vorgesehen sind, daß bei der Verschraubung der beiden Elemente (1, 2) der Rohrverbindung die Einschraubbegrenzunganschläge (17, 18) Kontakt geben, wenn die gewüschte Verspannung der konischen Gewinde und/oder der konischen Dichtflächen erreicht ist.

2. Verfahren nach Anspruch 1, dadurch gekennzeichnet, daß die konische Fläche (2, 2a) durch die Köpfe der Gewindegänge eines konischen Gewindes gebildet wird.

3. Verfahren nach Anspruch 1, dadurch gekennzeichnet, daß die konische Fläche (2, 2a) durch die konisch verlaufenden Köpfe der Gewindegänge eines zylindrischen Gewindes gebildet wird.

4. Verfahren nach Anspruch 1, dadurch gekennzeichnet, daß die konische Fläche (2, 2a) durch eine konische Dichtfläche gebildet wird.

5. Verfahren nach Anspruch 4, dadurch gekennzeichnet, daß die konische Dichtfläche an das Ende eines zylindrischen Gewindes anschließt.

6. Verfahren nach Anspruch 4, dadurch gekennzeichnet, daß die konische Dichtfläche zwischen zwei Bereichen zylindrischer Gewinde liegt.

7. Verfahren nach Anspruch 1, dadurch gekennzeichnet, daß die Spindel ein zweites Werkzeug (5a) aufweist, um gleichzeitig eines zweiten Einschraubbegrenzungsanschlag zu bearbeiten.

8. Vorrichtung zum Bearbeiten von Einschraubbegrenzungsanschlägen einer Rohrverbindung aus konischen einander entsprechenden Bolzen- und Mutterelementen (2, 2a), die eine erste Zusammenstellung von Werkzeugen aufweist, bestehend aus

einem Ring (11) zum Anliegen gegen eine konische Fläche des Bolzenelementes,

einer Spindel (3), die koaxial zum Ring (11) so positioniert ist, daß der Ring in Bezug auf die Spindel frei drehbar und axial verstellbar ist,

einem Werkzeug (5), das auf der Spindel montiert ist, um den Einschraubbegrenzungsanschlag des Bolzenelementes zu bearbeiten, und

einem Halteanschlag (9) an der Spindel, der sich gegen den Ring (11) abstützt, wenn der Einschraubbegrenzungsanschlag bis zum Erreichen einer vorgegebenen Position in Bezug auf die konische Fläche bearbeitet wird, und

eine zweite Zusammenstellung von Werkzeugen aufweist, bestehend aus

einem Ring (11), der gegen eine konische Fläche des Mutterelementes anliegt,

einer Spindel (3), die koaxial zum Ring (11) so positioniert ist, daß der Ring in Bezug auf die Spindel frei drehbar und axial verstellbar ist, einem Werkzeug (5a), das auf der Spindel montiert ist, um den Einschraubbegrenzungsanschlag des Mutterelementes zu bearbeiten, und

einem Halteanschlag (9) an der Spindel, der mit der Spindel verbunden ist, um sich gegen den Ring (11) abzustützen, wenn der Einschraubbegrenzungsanschlag bis zum Erreichen einer vorgegebenen Position in Bezug auf die konische Fläche bearbeitet wird,

wobei die Stellungen der Halteanschläge (9) an den Spindeln (3) durch die Verspannung festgelegt sind, die zwischen den Gewinden und/oder zwischen den konischen Dichtungsfläche nach der Verschraubung der Verbindung vorliegen müssen.

9. Vorrichtung nach Anspruch 8, dadurch gekennzeichnet, daß der Ring (11) durch elastische Mittel in Richtung der Gewinde des zu bearbeitenden Elementes gedrückt wird.

**Claims**

1. A method of machining the stops for limitation of screwing home a pipe joint having corresponding male and female tapered members, comprising:

—machining a frustoconical surface (2, 2a) upon one of the said male (1) or female (1a) members as far as its final configuration;

—rough-machining upon the said member a stop (17, 18) for limitation of screwing home;

—engaging a collar (11) over the said frustoconical surface (2, 2a), the said collar having a frustoconical surface complementary with the frustoconical surface of the said member;

—positioning coaxially with the said collar a spindle (3) supporting a tool (5, 5a) for machining the said stop (17, 18) for limitation of screwing home, the said collar being free to be displaced in rotation and axially with respect to the said spindle;

—communicating to the said spindle (3) a rotation and an axial displacement for effecting on the said member the final machining of the stop (17, 18) for limitation of screwing home; and

—interrupting the said final machining of the stop at a predetermined position when the face (12) of the said collar (11) comes to bear against a stop (9) integral with the said spindle;

—realizing in the same manner the stop for limitation of screwing home on the other member;

—the positions of each of the stops (9) effected on the spindles being such that at the time of screwing home the two members (1, 2) of the joint the stops (17, 18) for limitation of screwing home come into contact at the moment when the binding fit desired for the taper threads and/or the tapered sealing surfaces has been reached.

2. A method as in Claim 1, characterized by the fact that the said frustoconical surface (2, 2a) consists of the tips of the threads of a taper thread.

3. A method as in Claim 1, characterized by the fact that the said frustoconical surface (2, 2a) consists of the tips of the threads of a cylindrical thread truncated to a taper.

4. A method as in Claim 1, characterized by the fact that the said frustoconical surface (2, 2a) consists of a frustoconical sealing surface.

5. A method as in Claim 4, characterized by the fact that the frustoconical sealing surface is adjacent to one end of a cylindrical thread.

6. A method as in Claim 4, characterized by the fact that the frustoconical sealing surface is situated between two sections of cylindrical thread.

7. A method as in Claim 1, characterized by the fact that the said spindle includes a second tool (5a) for machining simultaneously a second stop for limitation of screwing home.

8. A device for machining the stops for limitation of screwing home a pipe joint having corresponding male and female frustoconical members (2, 2a), comprising:

—a first tool outfit including

. a collar (11) for engaging over a frustoconical surface on the male member;

. a spindle (3) positioned coaxially with the said collar (11) so that the said collar is free to turn and to be displaced axially with respect to the said spindle;

. a tool (5) located on the said spindle for machining the stop on the male member for limitation of screwing home; and

. a stop shoulder (9) on the said spindle for bearing against the said collar (11) when the stop for limitation of screwing home has been machined as far as a predetermined position with respect to the said frustoconical surface; and

—a second tool outfit including

. a collar (11) for engaging over a frustoconical surface on the female member;

. a spindle (3) positioned coaxially with the said collar (11) so that the said collar is free to turn and to be displaced axially with respect to the said spindle;

. a tool (5a) located on the said spindle for machining the stop on the female member for limitation of screwing home; and

. a stop shoulder (9) integral with the said spindle for bearing against the said collar (11) when the stop for limitation of screwing home has been machined as far as a predetermined position with respect to the said frustoconical surface;

the positions of the stop shoulders (9) on the said spindles (3) being determined by the binding fit which should exist in the threads and/or between the taper sealing surfaces after the joint has been screwed home.

9. A device as in Claim 8, characterized by the fact that the collar (11) is thrust back by resilient means in the direction of the thread on the member which is to be machined.

Fig.1

## Fig. 2